# EUROPEAN PATENT APPLICATION

(11) **EP 1 056 224 A1**
(43) Date of publication of application: **29.11.2000**
(21) Application number: 99304118.5
(22) Date of filing: 27.05.1999
(51) Int. Cl.: H04B 7/185

(54) **Satellite elevation used for selectably providing service to a user**

(71) Applicant: ICO Services Ltd., London W6 9BN (GB)
(72) Inventor: Grayson, Mark, Chiswick, London W4 2QT (GB); Muniere, Vincent, Wembley, London HA0 1BS (GB)
(74) Representative: Read, Matthew Charles

(57) **Abstract**

The angle of elevation X to a satellite 10 allowed for communications to proceed is limited in sympathy with local terrain or sea conditions by means of a terrain map which keeps track of the minimum elevation X for a particular user terminal 14 by foreknowledge of the terrain or sea conditions in the area occupied by the user terminal 14, or by gathered statistics based on success in audibility, or both.

## Description

The present invention relates to satellite communication systems. It particularly relates to systems where one or more communications satellites are in orbit about the Earth and provide communications with one or more user terminals on the surface of the Earth.

An orbiting satellite will provide a particular angle of elevation to each point on the surface of the Earth which is visible to the satellite. A user terminal can be at any point on the surface of the Earth. When the satellite is not in geosynchronous orbit, it will rise and set with respect to the user terminal and exhibit a time-varying range of angles of elevation to the user terminal.

When the satellite is immediately overhead the user terminal, it is closest thereto. When the satellite is low on the horizon, not only is it further from the user terminal, thereby attenuating signals with increased distance, but it also tends to suffer signal blockage because of surrounding hills, vegetation and buildings. At the frequencies used for communications (Typically more than 1500MHz) propagation is generally "line of sight". A low angle of elevation brings uncertainty of sustained communications. The problem becomes even more acute in urban areas, where the inter-building deep canyons, often encountered, mean that an angle of elevation, which would be more than functional in a more open environment, simply is not enough.

In the past, it has been known to limit the coverage of a communications satellite to be greater than a predetermined angle of elevation, typically 15 degrees. While this can help in the general case, particular cases of urban, mountainous or heavily vegetated areas are not accommodated.

According to a first aspect, the present invention consists in a satellite communications system wherein at least one satellite, in orbit about the Earth, is operative to communicate with a user terminal on the surface of the Earth, said system being operative to determine the angle of elevation to said at least one satellite with respect to said user terminal and selectably to provide service to said user terminal dependently upon said angle of elevation.

According to a second aspect, the present invention consists in a method, for use in a satellite communications system wherein at least one satellite, in orbit about the Earth, is operative to communicate with a user terminal on the surface of the Earth, said method including the steps of: determining the angle of elevation to said at least one satellite with respect to said user terminal, and selectably to providing service to said user terminal dependently upon said angle of elevation.

The invention further provides a system and method, wherein said at least one satellite is operative to provide a plurality of spaced spot beams onto the surface of the Earth, and wherein said angle of elevation is determined by detection of in which spot beam said user terminal is located.

The invention further provides a system and method, further operative to determine the position of the user terminal on the surface of the Earth, operative to match said determined position with a map of known terrain, and selectably operative to provide service to said user terminal dependently upon said terrain and said angle of elevation.

The invention, yet further, provides a system and method operative to limit service to said user terminal if said angle of elevation is below a predetermined limit for a particular terrain.

The invention, still further, provides a system and method wherein said user terminal is operative to control said limit of service, wherein said user terminal can have prior knowledge of signal blockage , wherein said user terminal can be operative to monitor reception and to report any local signal blockages, wherein said user terminal can be operative to collect statistical data concerning signal reception, and wherein the system can be responsive to said user terminal to determine the handover of traffic from one spot beam to another.

Yet further, the invention provides a system and method wherein said at least one satellite is operative to provide information to said user terminal concerning signal delays between said at least one satellite and said user terminal, and wherein said system is operative to determine said angle of elevation therefrom.

Still further, the invention provides a system and method wherein said at least one satellite comprises a plurality of satellites, and wherein said system is operative to select a spot beam to communicate with said user terminal from one satellite in preference to selecting a spot beam from another satellite dependently upon the angle of elevation of said one satellite over the angle of elevation of said another satellite.

The invention further provides that the terrain map can include maritime areas wherein angle of elevation is limited in sympathy with sea conditions.

The invention is further described, by way of example, by the following description, read in conjunction with the appended drawings, in which:
Figure 1 shows the general satellite communications environment in which the present invention is embodied.
Figure 2 illustrates local obstacles which can impede the functioning of a standard satellite communications system.
Figure 3 shows the manner in which the satellite of figure 1 can project spot beams onto the Earth.
Figure 4 shows an exemplary pattern of spot beam footprints on the Earth.
Figure 5 is a flowchart of activities which either the earth station of the user terminal of figure 1 can employ to avoid the problems shown in figure 2.
Figure 6 is a flowchart of the activity of the user terminal of figure 1 whereby further elevation problems can be learned and solved.
Figure 7 is a flowchart whereby the user terminal of figure 1 can control the selection of a new spot beam for call handover based on elevation.

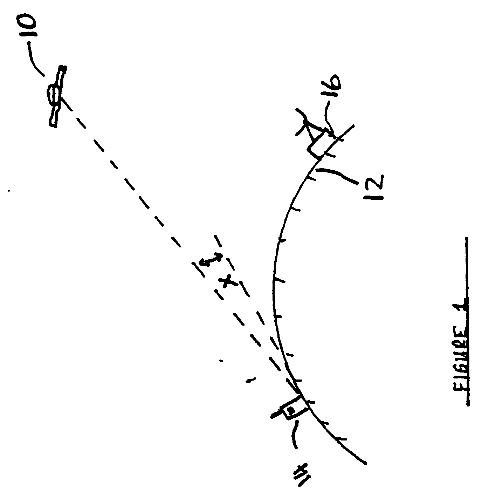

Attention is drawn to Figure 1. A communications satellite 10, in orbit about the Earth 12, is able to provide communication between a user terminal 14 and an earth station 16, both on the surface of the Earth 12. The user terminal 14 is generally in the form of a radio telephone handset and the earth station provides connection either to other user terminals 14 via the same 10 or other satellites or to the ground telephone (PSTN), cellular or trunk network that covers the Earth. The satellite 10 subtends and angle of elevation "X" above the user terminal's 14 visible horizon. The frequencies used between the satellite 10 and the user terminal are high enough to be substantially "line of sight". A suitable satellite communications system is the ICO™ system described in GB2 295 296, in which a satellite, earth station and user terminal are described in more detail.

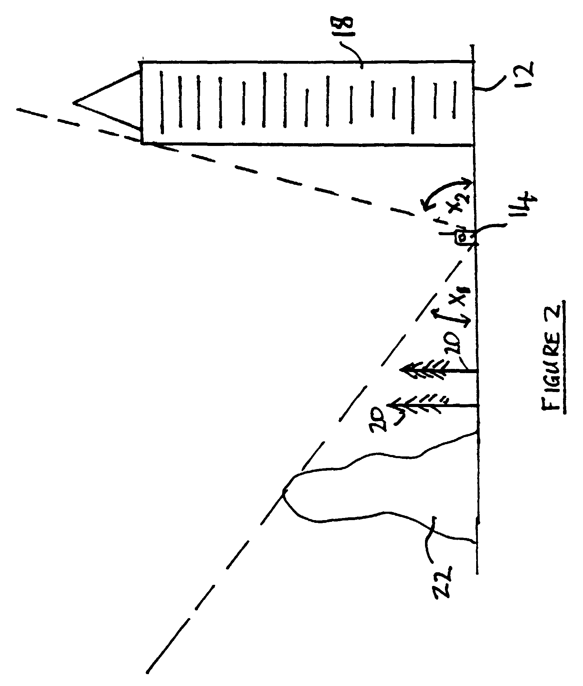

Figure 2 shows problems associated with use of a user terminal 14 resulting from terrain. The user terminal may be in an urban environment where one or more buildings limit the minimum angle of elevation for which a satellite 10 would be visible to a first value "X2" which is extremely steep. The satellite 10 would have a clear, line of sight path to the user terminal 14 for only a small part of its orbit. Equally, the user terminal 14 might be in a wooded or mountainous area where trees 20 or hills 22 limit the minimum angle of elevation where the satellite 10 would have a clear line of sight to the user terminal 14 to a second value "X1" which is less steep than "X2" but nonetheless a limitation. The minimum elevation of the satellite 10 to provide communications with the user terminal 14 is often dependent on the immediate environment of the user terminal 14. A user terminal 14 on the surface of the sea, or on the Russian Steppes or North American prairie would have no, or very little limitation on the minimum permissible angle of elevation for adequate line of sight signals to pass between it and a satellite 10. A call between the user terminal 14 and a satellite, below the minimum angle of elevation for a particular situation, would, at best, be unreliable and, at worst, could not happen at all.

Another situation, not illustrated in Figure 2, but equally addressed by the present invention, is the problem encountered by vessels at sea. A vessel, caused to roll, pitch and yaw by the motion of the sea surface, will have a constantly changing view of the horizon because of the corresponding ever changing angle of the antenna relative to the mean sea surface. In extreme conditions, when a vessel is small compared to the wavelength of waves, and the amplitude of the sea waves is high, the vessel, in the trough of a wave, will be surrounded by "hills of water" which effectively screen the antenna from the horizon. The present invention seeks also to provide reliable communications on all areas of the earth, whether they be land or sea.

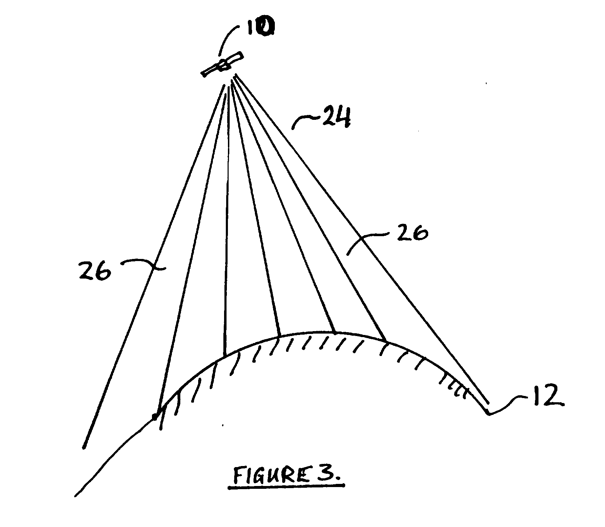

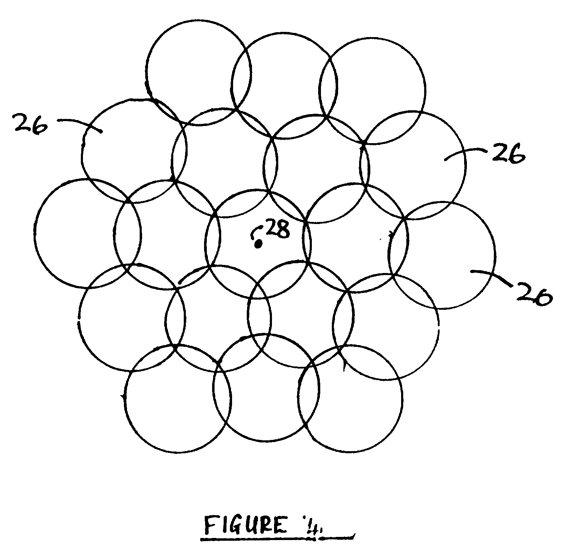

Figure 3 shows how the satellite 10 projects individual spot beams onto the earth 12. The cone 24 of radio coverage of the satellite 10 is divided into a plurality of spot beams 26 each of which covers a different portion of the surface of the earth 12. Each spot beam 26 has its own angle of elevation relative to the surface of the Earth. Figure 4 better illustrates this. Figure 3 is depicted in a one-dimensional division of the cone 24 of coverage, whereas the reality is two dimensional, as shown in Figure 4, where each spot beam 26 overlaps adjacent spot beams 26 and the angle of elevation of a particular spot beam 26 depends upon its distance from the nadir 28 of the satellite 10 (the point, on the earth 12, directly beneath the satellite 10).

Each spot beam 26 is provided with its own traffic channels for conducting calls between the satellite 10 and the user terminal 10 for communication by the satellite 10 down to the earth station 16. Equally, each spot beam 26 has one or more broadcast channels which uniquely identify the spot beam 26 and information channels whereby call requests and operational data can be passed from the earth station 16 to the user terminal 14 via the satellite 10 and from the user terminal 14 through the satellite 10 to the earth station 16. All of these elements are known in the art. In use, each spot beam 26 acts in much the same way as a cell in a cellular radio system, The spot beam pattern of figure 4 moves across the surface of the earth 12 as the satellite 10 progresses around its orbit and as a user terminal 14 leaves one spot beam 26 it must handover the call to another spot beam 26. A user terminal 14 initiates and receives calls from the particular spot beam 26 wherein it finds itself. There can be more than one satellite 10 and the satellites 10 can be in pursuing or crossing orbits, so that the simple pattern shown in figure 4 in fact becomes an overlay of several sets of spot beams 26, each from a different satellite. At any point on the earth 12 there can be two, three or more overlying sets of spot beams 26 so that a user terminal 14 could have access to any one of the competing satellites 10. All of these latter elements are also known in the art.

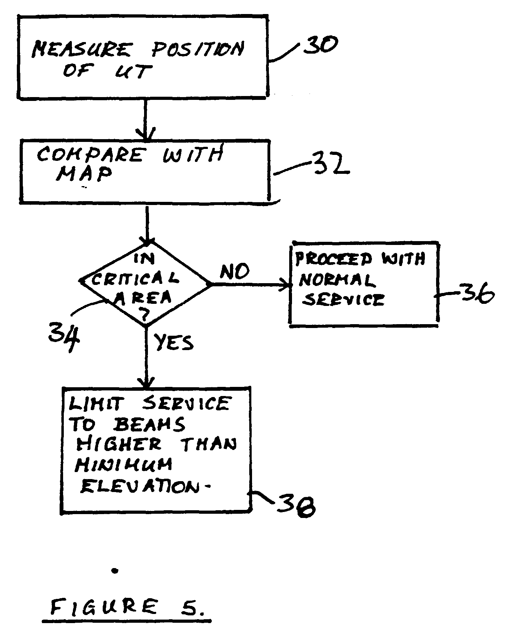

Figure 5 is a flowchart of activities which can be undertaken either by the earth station 16 or by the user terminal 14 whereby user terminal 14 activity can be restricted to angles of elevation which are known to be adequate.

In a first activity 30 the satellite 10, the earth station 16 and the user terminal 14 co-operate to measure the position of the user terminal 14 on the surface of the earth 12. This can be achieved by any means known in the art, for example, by GPS, or by methods shown in EP-A-0 848 506, EP-A-0 868 036 and EP-A-0 856 957. In any event, whichever method is used, the user terminal 14, the earth station 16, or both become aware of the geographical location of the user terminal 14, and can communicate that information to the other if required.

In a second activity 32 the position of the user terminal 14 is compared with a terrain map which can be stored in the earth station 16 and its associated network, or in the user terminal 14 itself. The purpose of the map is to determine if the user terminal is in a critical area where a high angle of elevation is essential. If the user terminal is in a particular city, there will be stored a certain minimum angle of elevation for that city. Likewise, wooded or mountainous areas will have their own particular minimum angles of elevation. These are all critical areas. Plains or calm sea, on the other hand, do not constitute a critical area.

A first test 34 looks to see if the user terminal 14 is in a critical area. A critical area can include any part of the earth, land or sea. If the user terminal 14 is located in a maritime environment, the first test combines a knowledge of the sea state (acquired from meteorological oceanographic data and applied, by earth station 16 and its associated network, to the terrain map) to determine if a particular maritime area is a critical area. This can depend upon the presence or proximity of storms, the prevailing winds generating large waves, and any other criteria that might make a vessel roll, pitch or yaw to excess. Some maritime areas will permanently be critical areas, (for example, the North Atlantic) whereas others will only be critical when weather conditions cause them so to be.

If the user terminal is not in a critical area, not, the third test 34 passes control to a third activity 36 which proceeds with the call as normal. If the first test 34 detects that the user terminal 14 is in a critical area, it passes control to a fourth activity 38 where traffic is restricted to spot beams 26 where the angle of elevation is greater that the minimum, stored with the map for that particular geographical area. This can be achieved by the user terminal 14 rejecting calls from the satellite 10 if the satellite 10 uses spot beam which is too low. The user terminal 14 can attempt to initiate calls only with spot beams 26 which are sufficiently high. The earth station 16 can limit access to a user terminal 14 by employing only a satellite 10 whose spot beams 26 are sufficiently high. The angle of elevation to a particular satellite can be learned by interrogating the broadcast information on the spot beam 26 it casts upon the earth 12 and matching the spot beam 26 identity with its known angle of elevation. Equally, the whole process can be achieved geometrically, by knowing the position of the user terminal 14 and the instant position of the satellite 10 in its orbit. These activities can take place either in the user terminal 14 or the earth station 16 system, and can combine the variously described methods individually or collectively.

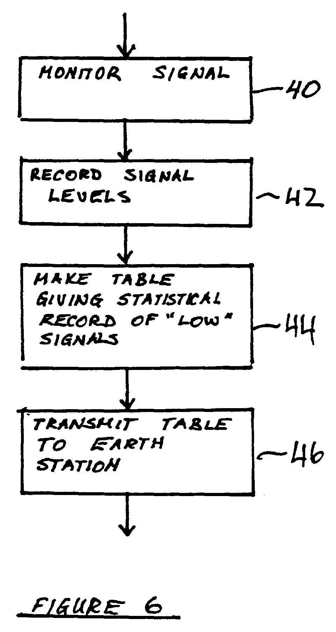

Figure 6 is a flowchart depicting a further measure which the system can adopt in order, better, to overcome the problems associated with elevation angle and obstructions. Whereas the terrain map described in association with Figure 5 has been depicted as a fixed entity, there is always a problem with updating. Figure 6 illustrates a way that a terrain map may be continuously updated or even generated from scratch.

In a fifth activity 40 the user terminal 14 monitors signals it can hear. Typically, but not exclusively, these may be the broadcast channels associated with the spot beams 26 that the user terminal 14 can hear. In a sixth activity 42 the user terminal keeps a record of the signal levels (or the bit error rate, or any other measure of signal quality). Each spot beam 26 , as earlier described, has an associated elevation angle, which is stored in association with the recorded signal levels. A seventh activity 44 then looks for unacceptably low signal levels and makes a statistical table. Lastly, if required, an eighth activity 46 transmits the statistical table of the sixth activity 44 to the earth station 16. The statistical table of the seventh activity 44 is used by the user terminal 14, the earth station 16, or both to update the terrain map or to generate a map from scratch if one does not already exist. The statistical table enables the system to know, in advance, what elevation angles are best for a particular location by actual measurement.

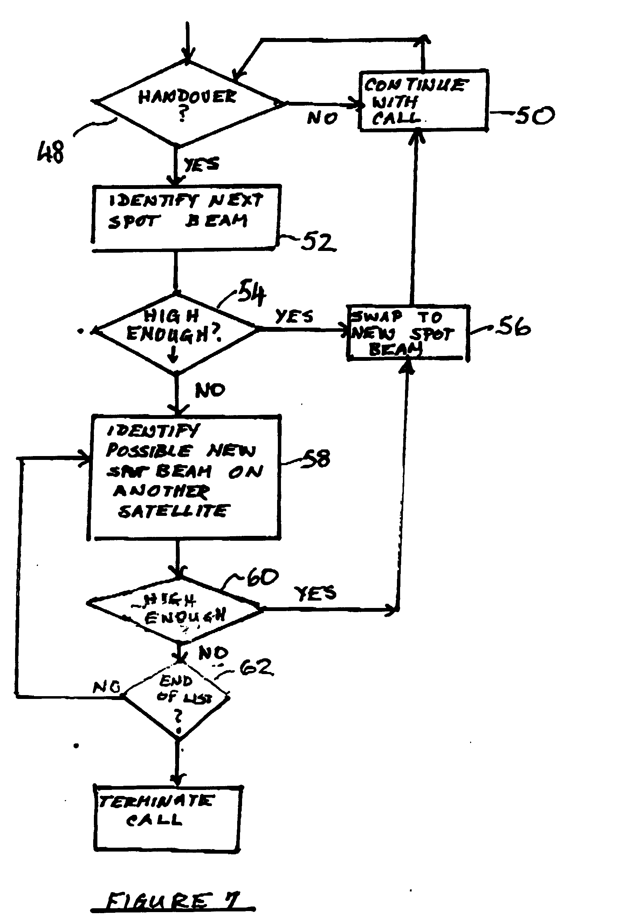

Figure 7 is a flowchart illustrating an exemplary manner in which the system copes with minimum elevation angles when a call or registration is handed over between spot beams 26.

As earlier described, a call or registration is handed over between spot beams 26 whenever the particular spot beam 26 in which the user terminal 14 is registered or from which the user terminal 14 is making a call moves away from the position of the user terminal 14 so that a new spot beam 26 is required.

In a second test 48 the user terminal 14 determines if a handover is required. This can be done in any way known in the art. It is known to use shows timing method whereby the user terminal 14 is aware that a handover is due. Other methods, known in the art include the user terminal 14 noting the reduction in signal strength towards the edge of a spot beam 26 as a trigger for handover. Any method will suffice, so far as the present invention is concerned. It is simply necessary that the user terminal (alone or in conjunction with the entire system) is aware of the need for a handover.

If the second test 48 does not detect the need for a handover, a ninth activity 50 continues with the call (or registration state) and the second test 48 keeps looking for handover conditions.

If the second test 48 detects that a handover is required, a tenth activity 52 causes the user terminal to seek a subsequent spot beam 26. This can be done in various ways, A simple progression from one spot beam 26 to the next, in the pattern shown in figure 4, for the same satellite 10, is the most obvious method. It is also known in the art for the user terminal 14 to listen for signals from other, slightly overlapping spot beams to select that with the best signal. It is not part of the present invention exactly how the next spot beam 26 is selected. It is simply necessary that a selection can be made.

Once the tenth activity 52 has selected the next spot beam, a third test 54, based on the identity of the selected spot beam 26, decides if the angle of elevation is sufficiently high for that terrain. If it is, an eleventh activity 56 causes the user terminal 14 to co-operate with the system to handover to the selected spot beam 26. If the third test 54 determines that the selected spot beam 26 is not of a sufficient angle of elevation, this implies that no other spot beam 26 from that same satellite 10 can meet the criterion. Accordingly, a twelfth activity 58 causes the user terminal 14 to monitor spot beams from other satellites 10 and to select one as a candidate for handover. Then, a fourth test 60 checks to see if the selected spot beam 26 is of sufficient angle of elevation. If it is, control passes to the eleventh activity 56. If it is not, a fifth test 62 checks to see if the user terminal 14 has exhausted all candidate satellites 10. If it has, the call or registration is terminated. If not, control is passed back to the twelfth activity 58 for yet another satellite 10 to become the source of a selected next spot beam 26. In this way, the angle of elevation of a spot beam 26 at handover is always ensured to be adequate for the particular terrain in which the user terminal 14 is located.

The various aspects of the present invention have, largely, been described with reference to spot beam 26 patterns on the surface of the earth 12, It is to be appreciated that the present invention equally applies to systems with only one beam 24 26 per satellite 10 and that handover would then, automatically, be between satellites 10.

Whilst the examples of the invention have been described in relation to the ICO™ network, other satellite networks could be used such as described in "New Satellites for Personal Communications" Scientific American, April 1998, pp 60-67 for an overview.

Whilst the user terminal has been described in terms of a mobile telephone handset, it could be semi-fixed e.g. on a vehicle or completely fixed such as in a telephone booth, such as a pay telephone.

## Claims

1. A satellite communications system wherein at least one satellite, in orbit about the Earth, is operative to communicate with a user terminal on the surface of the Earth, said system being operative to determine the angle of elevation to said at least one satellite with respect to said user terminal and selectably to provide service to said user terminal dependently upon said angle of elevation.

2. A system, according to claim 1, wherein said at least one satellite is operative to provide a plurality of spaced spot beams onto the surface of the Earth, and wherein said angle of elevation is determined by detection of in which spot beam said user terminal is located.

3. A system, according to claim 1 or claim 2 wherein , further operative to determine the position of the user terminal on the surface of the Earth, operative to match said determined position with a map of known terrain, and selectably to provide service to said user terminal dependently upon said terrain and said angle of elevation.

4. A system according to claim 2 or 3 operative to limit service to said user terminal if said angle of elevation is below a predetermined limit for a particular terrain.

5. A system according to claim 4 wherein said user terminal is operative to control said limit of service.

6. A system, according to claim 5, wherein said user terminal has prior knowledge of signal blockage.

7. A system, according to claim 5 or claim 6, wherein said user terminal is operative to monitor reception and to report any local signal blockages.

8. A system, according to claim 5, 6 or 7, wherein said user terminal is operative to collect statistical data concerning signal reception.

9. A system according to claim 5, 6, 7 or 8, operative to respond to said user terminal to determine the handover of traffic from one spot beam to another.

10. A system according to claim 5 wherein said at least one satellite is operative to provide information to said user terminal concerning signal delays between said at least one satellite and said user terminal, and wherein said system is operative to determine said angle of elevation therefrom.

11. A system, according to claim 2, wherein said at least one satellite comprises a plurality of satellites, and wherein said system is operative to select a spot beam to communicate with said user terminal from one satellite in preference to selecting a spot beam from another satellite dependently upon the angle of elevation of said one satellite over the angle of elevation of said another satellite.

12. A system, according to any of claim 3, or according to claims 4, 5, 6, 7, 8, 9, 10 or 11 when dependent upon claim 3, wherein said terrain map includes maritime areas, and where said angle of elevation is varied in sympathy with sea conditions.

13. A method, for use in a satellite communications system wherein at least one satellite, in orbit about the Earth, is operative to communicate with a user terminal on the surface of the Earth, said method including the steps of: determining the angle of elevation to said at least one satellite with respect to said user terminal, and selectably to providing service to said user terminal dependently upon said angle of elevation.

14. A method, according to claim 13, including the steps of: said at least one satellite providing a plurality of spaced spot beams onto the surface of the Earth, and determining said angle of elevation by detection of in which spot beam said user terminal is located.

15. A method, according to claim 13 or claim 14 wherein , including the steps of: determining the position of the user terminal on the surface of the Earth matching said determined position with a map of known terrain, and selectably to providing service to said user terminal dependently upon said terrain and said angle of elevation.

16. A method according to claim 14 or 15 including the step of limiting service to said user terminal if said angle of elevation is below a predetermined limit for a particular terrain.

17. A method according to claim 16 including the step of said user terminal controlling said limit of service.

18. A method, according to claim 17, including the step of providing said user terminal with prior knowledge of signal blockage.

19. A method, according to claim 17 or claim 18, including the step of said user terminal monitoring reception and reporting any local signal blockages.

20. A method, according to claim 17, 18 or 18, including the step of said user terminal is collecting statistical data concerning signal reception.

21. A method according to claim 17, 18, 19 or 20, including the steps of responding to said user terminal to determine the handover of traffic from one spot beam to another.

22. A method according to claim 17 including the steps of said at least one satellite providing information to said user terminal concerning signal delays between said at least one satellite and said user terminal, and said system determining said angle of elevation therefrom.

23. A method, according to claim 13, wherein said at least one satellite comprises a plurality of satellites, and including the step selecting a spot beam to communicate with said user terminal from one satellite in preference to selecting a spot beam from another satellite dependently upon the angle of elevation of said one satellite over the angle of elevation of said another satellite.

24. A method, according to any of claim 14, or according to claims 15, 16, 17, 18, 19, 20, 21 or 22 when dependent upon claim 3, including the steps of: including, in said terrain map , maritime areas, including, in said terrain map, current sea conditions, and varying and said minimum angle of elevation for provision of service in sympathy with current sea conditions.

25. A ground segment for use in a satellite telecommunications system to provide a communications channel to a user terminal at a remote location via a satellite, the ground segment being configured to determine the elevational angle of the satellite relative to the user terminal at said remote location and to selectively provide service to the user terminal as a function of the elevational angle.
